# EUROPÄISCHE PATENTSCHRIFT

(11) **EP 1 388 476 B1**
(45) Veröffentlichungstag und Bekanntmachung des Hinweises auf die Patenterteilung: **22.08.2007**
(21) Anmeldenummer: 03016558.3
(22) Anmeldetag: 24.07.2003
(51) Int. Cl.: B60T 8/36

(54) **Hydraulikaggregat für eine Fahrzeugbremsanlage mit Blockierschutzeinrichtung**
Hydraulic unit for a vehicle brake system with an anti-lock device
Ensemble hydraulique pour système de freinage avec dispositif anti-blocage

(30) Priorität: 08.08.2002 DE 10236389; 08.08.2002 DE 20212236 U
(43) Veröffentlichungstag der Anmeldung: 11.02.2004
(73) Patentinhaber: ROBERT BOSCH GMBH, 70442 Stuttgart (DE)
(72) Erfinder: Inoue, Isao, 244-0813 Yokohama (JP); Schlitzkus, Michael, 87463 Dietmannsried (DE); Weh, Andreas, 87471 Durach (DE); Patterson, Douglas, 29445 South Carolina (US)

(56) Entgegenhaltungen:
- EP-A- 0 313 292
- EP-A- 1 134 141
- WO-A-94/07719
- DE-A- 19 958 194
- DE-U- 20 212 237
- PATENT ABSTRACTS OF JAPAN vol. 2000, no. 25, 12. April 2001 (2001-04-12) -& JP 2001 225735 A (UNISIA JECS CORP), 21. August 2001 (2001-08-21)
- PATENT ABSTRACTS OF JAPAN vol. 2000, no. 24, 11. Mai 2001 (2001-05-11) -& JP 2001 191908 A (BOSCH BRAKING SYSTEMS CO LTD), 17. Juli 2001 (2001-07-17)

## Beschreibung

### Stand der Technik

Die Erfindung betrifft ein Hydraulikaggregat für eine Fahrzeugbremsanlage mit einer Blockierschutzeinrichtung.

Als der vorliegenden Erfindung am nächsten kommender Stand der Technik wird der in der EP 1134 141 A2 beschriebene Gegenstand angesehen. Dabei handelt es sich um ein Hydraulikaggregat für eine Fahrzeugbremsanlage mit Blockierschutzeinrichtung, mit einem Gehäuseblock, aufweisend für einen Bremskreis einen Bremsdruckgeberanschluß und Radbremsenanschlüsse, wenigstens einen Ventilaufnahmeraum zur Aufnahme wenigstens eines Einlaßventils und wenigstens einen Ventilaufnahmeraum zur Aufnahme wenigstens eines Auslaßventils, wobei die Ventilaufnahmeräume achsparallel zu dem Bremsdruckgeberanschluß angeordnet sind, ferner einen Pumpenaufnahmeraum, dessen Längsachse wenigstens annähernd senkrecht zu Längsachsen der Ventilaufnahmeräume verläuft, wenigstens einen Niederdruckspeicheraufnahmeraum und eine durchgehende, gerade Verbindung zwischen dem Bremsdruckgeberanschluß, dem wenigstens einen Ventilaufnahmeraum für ein Einlaßventil und dem Pumpenaufnahmeraum, wobei deren Längsachse wenigstens annähernd senkrecht zu den Längsachsen der Ventilaufnahmeräume und der Längsachse des Pumpenaufnahmeraums verläuft.

Diese Längsachse des Pumpenaufnahmeraums liegt in einer gemeinsamen Gehäuseblockebene mit den Längsachsen der Ventilaufnahmeräume. Die sich dadurch ergebende Hintereinanderanordnung der Pumpen und Einlassventile wirkt sich negativ auf die Abmessungen des Gehäuseblock aus, indem der Gehäuseblock in Richtung dieser Hintereinanderanordnung relativ viel Bauraum einnimmt.

Eine Fahrzeugbremsanlage mit einem Hydraulikaggregat, welches die Befehle eines elektronischen Steuergerätes umsetzt und unabhängig von einem Fahrer über Ventile die Drücke in Radbremsen steuert, ist beispielsweise auch in der deutschen Offenlegungsschrift DE 44 31 250 A1 beschrieben.

Das darin offenbarte Hydraulikaggregat weist einen Gehäuseblock auf, in den eine erste Reihe oberer Stufenbohrungen und eine zweite Reihe unterer Stufenbohrungen zur Aufnahme von Wegeventilen eingebracht sind, wobei je eine obere Stufenbohrung und eine untere Stufenbohrung miteinander und zusätzlich mit einer Bremsleitungsanschlußbohrung kommunizieren. Die oberen Stufenbohrungen zur Aufnahme eines Wegeventils sind weiters mit einem Radbremsanschluß verbunden, welcher auch mit einem als Dämpfer dienenden Niederdruckspeicher verbunden ist. Von dem Niederdruckspeicher verläuft eine Bohrung zu einem Pumpenaufnahmeraum, welcher mit einem weiteren Niederdruckspeicher und mit zwei unteren Stufenbohrungen, welche zur Aufnahme von Auslaßventilen vorgesehen sind, verbunden ist.

Für jeden der zwei vorgesehenen Bremskreise wird ein sogenannter Primärkreis mit Leitungsverbindungen von einem Hauptbremszylinder, welcher den Bremsdruck vorgibt, über in die oberen Ventilaufnahmeräume eingesetzte Einlaßventile zu den Radbremsen gebildet, während die Leitungsverbindungen von den Radbremsen zu in den unteren Ventilaufnahmeräumen eingesetzten Auslaßventilen, zu den Niederdruckspeichern und die in den Pumpenaufnahmeraum eingesetzte Rückförderpumpe zur Rückförderung in den Primärkreis einen Sekundärkreis bilden.

Der in der DE 44 31 250 A1 gezeigte Gehäuseblock des Hydraulikaggregates weist den Nachteil auf, daß die Verbindung zwischen dem Hauptbremszylinderanschluß, den Einlaßventilen und der Pumpe über den als Dämpfer dienenden Niederdruckspeicher geführt ist, wobei die über diese Verbindung geführte Bremsflüssigkeit zahlreiche Umlenkungen erfährt.

Nachteilig ist zudem ein großer Bauraumbedarf und ein großes Druckmittelvolumen im Sekundärkreis eines Bremskreise, wodurch dieser abgegrenzte Bereich, der nicht bei einer Normalbremsung, sonder nur bei einer Bremsung mit Regelung von Bremsflüssigkeit durchspült wird, nur schwer entlüftbar ist.

Aus der deutschen Offenlegungsschrift DE 199 58 194 A1 ist ein Hydraulikaggregat für eine schlupfgeregelte Bremsanlage mit einem Aufnahmekörper bekannt, der in mehreren Ventilaufnahmebohrungen einer ersten und zweiten Ventilreihe Ein- und Auslaßventile aufnimmt und eine zwischen den Ventilaufnahmebohrungen und Niederdruckspeicheraufnahmeräumen angeordnete Pumpenbohrung aufweist, die quer zur Einmündungsrichtung der Ventilaufnahmebohrungen in den Aufnahmekörper gerichtet ist und mittig eine Einheit mit einer Motoraufnahmebohrung bildet, die senkrecht auf die Pumpenbohrung gerichtet ist. Zwischen diesen Aufnahmebohrungen bzw. -räumen sind diese miteinander verbindende Druckmittelkanäle in den Aufnahmekörper eingebracht, die eine hydraulische Verbindung zwischen Bremsdruckgeberanschlüssen und Radbremsanschlüssen herzustellen vermögen.

Auch hier ist die Verbindung der einzelnen Anschlüsse und Aufnahmeräume in dem Aufnahmegehäuse dahingehend nachteilig, daß sie größtenteils mit Umlenkstellen ausgebildet sind. So ist beispielsweise ein Druckmittelkanal von einem Bremsdruckgeberanschluß zu einer Geräuschdämpfungskammer und der Pumpenbohrung derart mit zwei in einer Reihe angeordneten Ventilaufnahmeräumen für Einlaßventile verbunden, daß von dem besagten Druckmittelkanal eine Stichbohrung zu einer senkrecht zu dem Druckmittelkanal verlaufenden, die Ventilaufnahmeräume verbindenden Bohrung führt. Dabei bildet der Übergangsbereich zwischen den Bohrungsabschnitten jeweils eine 90°-Abwinkelung.

Zu dem hohen fertigungstechnischen Aufwand und den strömungstechnischen Nachteilen einer solchen 90°-Abwinkelung kommt hinzu, daß ein jeder Bohrungsabschnitt nach außen beispielsweise durch ein kugelartiges Verschlußelement verschlossen werden muß. Damit ergibt sich auch die Gefahr einer eventuellen Undichtigkeit während der Betriebszeit, da diese Verschlüsse einer Druckpulsation ausgesetzt sind.

Zur Einsparung von Verschlußelementen am Ende von Bohrungen wird vorgeschlagen, den den Bremsdruckgeberanschluß mit einer Geräuschdämpfungskammer verbindenden Druckmittelkanal von dem Bremsdruckgeberanschluß aus in den Gehäuseblock zu bohren, was jedoch eine achsparallele, d. h. senkrecht zu einer Pumpenmotorachse verlaufende Anordnung des Bremsdruckgeberanschlusses bedingt. Eine solche Anordnung führt jedoch zu einem erhöhten Bauraumbedarf der Bremsanlage im Fahrzeug.

Es ist Aufgabe der vorliegenden Erfindung, ein Hydraulikaggregat für eine Fahrzeugbremsanlage mit Blockierschutzeinrichtung zu schaffen, bei dem die Anordnung von Aufnahmeräumen für eine Pumpe, Ventile und Niederdruckspeicher und die Verbindungen zwischen diesen Elementen in einem Gehäuseblock derart optimiert ist, daß die Fahrzeugbremsanlage möglichst wenig Bauraum beansprucht und das Hydraulikaggregat kompakter, einfacher und kostengünstiger herzustellen ist.

### Vorteile der Erfindung

Das erfindungsgemäße Hydraulikaggregat für eine Fahrzeugbremsanlage mit Blockierschutzeinrichtung, bei dem ein Gehäuseblock für einen Bremskreis einen Bremsdruckgeberanschluß und Radbremsenanschlüsse aufweist, wenigstens einen Ventilaufnahmeraum zur Aufnahme wenigstens eines Einlaßventils und wenigstens einen Ventilaufnahmeraum zur Aufnahme wenigstens eines Auslaßventils hat, wobei die Ventilaufnahmeräume achsparallel zu dem Bremsdruckgeberanschluß angeordnet sind, weiters einen Pumpenaufnahmeraum, dessen Längsachse wenigstens annähernd senkrecht zu Längsachsen der Ventilaufnahmeräume verläuft, und wenigstens einen Niederdruckspeicheraufnahmeraum aufweist, und mit einer durchgehenden geraden Verbindung zwischen dem Bremsdruckgeberanschluß, dem wenigstens einen Ventilaufnahmeraum für ein Einlaßventil und dem Pumpenaufnahmeraum ausgebildet ist, deren Längsachse wenigstens annähernd senkrecht zu den Längsachsen der Ventilaufnahmeräume und der Längsachse des Pumpenaufnahmeraums verläuft, hat den Vorteil, daß der Gehäuseblock mit minimalem Bohrungsaufwand und sehr geringem Bauraumbedarf ausgeführt werden kann.

Indem ein jeder Bremsdruckgeberanschluß bei der erfindungsgemäßen Anordnung achsparallel zu einer Achse eines Pumpenmotors ausgerichtet ist, besteht die Möglichkeit, Bremsleitungen platzsparend neben dem Motor der Bremsanlage anzuordnen und somit die gesamte Bremsanlage mit geringen Abmessungen zu verwirklichen.

Neben einer Baugrößenreduzierung wird durch die durchgehende gerade Verbindung zwischen dem Bremsdruckgeberanschluß, dem wenigstens einem Ventilaufnahmeraum für ein Einlaßventil und dem Pumpenaufnahmeraum vorteilhafterweise auch eine Reduzierung der Bauteilanzahl und eine Erhöhung der Dichtigkeit nach außen erreicht, da weniger Verschlüsse für an die Außenseite des Gehäuseblocks führende Leitungen vorgesehen werden müssen.

In einer besonders vorteilhaften Ausführung der Erfindung ist das Hydraulikaggregat dämpfungskammerfrei ausgebildet. Dämpfungskammern, welche meist vorgesehen werden, um eine von der Pumpe der Bremsanlage verursachte Druckpulsation zu glätten und eine Geräuschreduktion zu erzielen, sind häufig Grund für eine Umlenkung der Druckmittelführung in dem Gehäuseblock, wobei zur Realisierung von Dämpfungskammern mehrere Bohrungen in dem Gehäuseblock erforderlich sind, welche einen Zulauf und einen Ablauf für die Dämpfungskammern bilden und an ihren an einer Außenseite des Gehäuseblocks liegenden Enden nach ihrer Herstellung durch ein Verschlußmittel zu verschließen sind. Die Erfindung geht davon aus, daß durch eine druckpulsationsdämpfende, insbesondere getaktete Ansteuerung des Pumpenmotors, welche durch einfache Softwaremaßnahmen zu realisieren ist, Dämpfungskammern entbehrlich sind. Dies vereinfacht die spanende Teilebearbeitung, spart Bauraum und Kosten und reduziert die Undichtigkeitsgefahr.

Des weiteren ist es vorteilhaft, wenn die Positionierung der Ventilaufnahmeräume der Auslaßventile in der Nähe der Niederdruckspeicheraufnahmeräume erfolgt. Dies bewirkt eine Reduzierung des Druckmittelvolumens in dem nur bei einer geregelten Bremsung in den Bremskreis einbezogenen Sekundärkreis und ermöglicht eine Verbesserung der Entlüftbarkeit in verschiedenen Einbaulagen sowie eine Verringerung der Gefahr des Ausgasens von eingesperrtem Volumen.

Wenn der Pumpenaufnahmeraum direkt zwischen der Ventilreihe der Auslaßventile und der Ventilreihe der Einlaßventile angeordnet ist, kann der Gehäuseblock in Ventilachsrichtung vorteilhafterweise mit einer geringen Gehäusedicke ausgeführt sein.

Bei einer fertigungstechnisch einfachen Ausführung der Erfindung mit geringem Zerspanungsaufwand ist eine separate, direkte Verbindung zwischen jedem Ventilaufnahmeraum eines Auslaßventils und einem zugeordneten Niederdruckspeicheraufnahmeraum vorgesehen, wobei diese Verbindung zweckmäßig als eine gerade Bohrung ausgeführt sein kann, welche direkt von dem Aufnahmeraum eines Auslaßventils in den betreffenden Niederdruckspeicheraufnahmeraum führt.

Zur Verbesserung der Entlüftbarkeit des Niederdruckspeichers kann eine weitere separate Verbindung zwischen dem Niederdruckspeicheraufnahmeraum und dem Pumpenaufnahmeraum vorgesehen sein, welche vorzugsweise mit ihrer Längsachse achsparallel und zu der Längsachse des Niederdruckspeicheraufnahmeraums in Richtung einer Anschlußfläche des Hydraulikaggregates für einen Pumpenmotor exzentrisch versetzt angeordnet ist.

Durch eine solche Verbindung kann die Entlüftung des erfindungsgemäßen Hydraulikaggregates bei dessen horizontaler und vertikaler Einbaulage bezogen auf eine Längsachse des Pumpenmotors in einem Kraftfahrzeug erleichtert werden.

Weitere Vorteile und vorteilhafte Ausgestaltungen des Gegenstandes nach der Erfindung sind der Beschreibung, der Zeichnung und den Patentansprüchen entnehmbar.

### Zeichnung

Ein Ausführungsbeispiel eines Hydraulikaggregates nach der Erfindung ist in der Zeichnung schematisch vereinfacht dargestellt und wird in der nachfolgenden Beschreibung näher erläutert. Es zeigen
Figur 1 einen vereinfachten Hydraulikschaltplan einer Fahrzeugbremsanlage mit in einem erfindungsgemäßen Hydraulikaggregat angeordneten Elementen; und
Figur 2 eine stark schematisierte dreidimensionale Darstellung eines Gehäuseblocks des Hydraulikaggregates der Figur 1 mit Aufnahmeräumen für in das Hydraulikaggregat einzubauende Elemente und Verbindungen zwischen den Aufnahmeräumen.

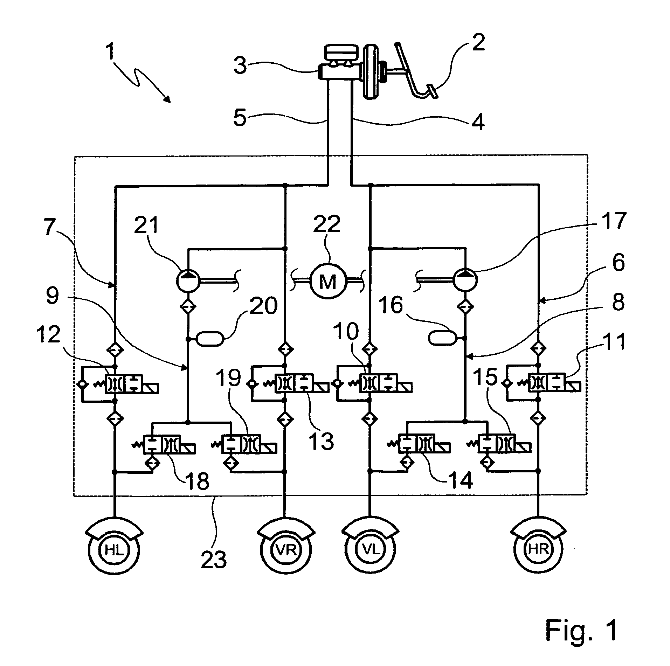

Die Figur 1 zeigt einen vereinfachten Hydraulikschaltplan für eine Fahrzeugbremsanlage 1 mit einer Blockierschutzeinrichtung, bei der in Abhängigkeit der Stellung eines Bremspedals 2 und eines Bremsdruckgebers bzw. Hauptbremszylinders 3 ein Bremsdruck in einen ersten Bremskreis 4 und einen zweiten Bremskreis 5 eingeleitet wird. Die vorliegende Fahrzeugbremsanlage 1 ist dabei als Diagonalbremsanlage ausgeführt, bei der der erste Bremskreis 4 auf eine Radbremse VL eines an dem betreffenden Fahrzeug vorne links angeordneten Vorderrades und auf eine Radbremse HR eines bezogen auf eine Fahrzeugmittelachse diagonal gegenüberliegend, d.h. hinten rechts angeordneten Hinterrades wirkt. Der zweite Bremskreis 5 wirkt entsprechend auf eine Radbremse VR eines Vorderrades vorne rechts und eine Radbremse HL eines diagonal hierzu hinten links an dem Fahrzeug angeordneten Hinterrades.

Ein jeder Bremskreis 4 und 5 teilt sich in einen Primärkreis 6 bzw. 7 und in einen Sekundärkreis 8 bzw. 9 auf. Der Primärkreis 6 des ersten Bremskreises 4 läuft von dem Hauptbremszylinder 3 über ein Einlaßventil 10 für die Radbremse VL vorne links zu dieser Radbremse und ein Einlaßventil 11 für die Radbremse HR hinten rechts zu dieser Radbremse. Analog hierzu führt der Primärkreis 7 des zweiten Bremskreises 5 von dem Hauptbremszylinder 3 über ein Einlaßventil 12 für die Radbremse HL hinten links und ein Einlaßventil 13 für die Radbremse VR vorne rechts zu den zugeordneten Radbremsen.

Der Sekundärkreis 8 des ersten Bremskreises 4 erstreckt sich von einer der Radbremsen VL, HR des ersten Bremskreises 4 über ein der Radbremse VL vorne links zugeordnetes Auslaßventil 14 bzw. ein der Radbremse HR hinten rechts zugeordnetes Auslaßventil 15 und einen Niederdruckspeicher 16 zu einer Rückförderpumpe 17, mittels der eine Rückförderung des in dem Sekundärkreis 8 befindlichen Hydraulikmittels in den Primärkreis 6 möglich ist.

Der Sekundärkreis 9 des zweiten Bremskreises 5 ist analog hierzu aufgebaut mit von der Radbremse HL hinten links über ein zugeordnetes Auslaßventil 18 bzw. von der Radbremse VR vorne rechts über ein zugeordnetes Auslaßventil 19 zu einem Niederdruckspeicher 20 führenden Druckleitungen und einer dem Niederdruckspeicher 20 nachgeschalteten Rückförderpumpe 21. Die Rückförderpumpen 17 und 21 werden mittels eines vorliegend mit einem Exzenter ausgebildeten gemeinsamen Pumpenmotors 22 angetrieben.

Die konstruktive Ausgestaltung der Ein- und Auslaßventile 10 bis 15, 18 und 19 sowie ihr Zusammenwirken mit den übrigen Elementen der Bremskreise 4, 5 kann auf an sich bekannte Art, wie z. B. in der DE 195 31 468 beschrieben, ausgeführt sein.

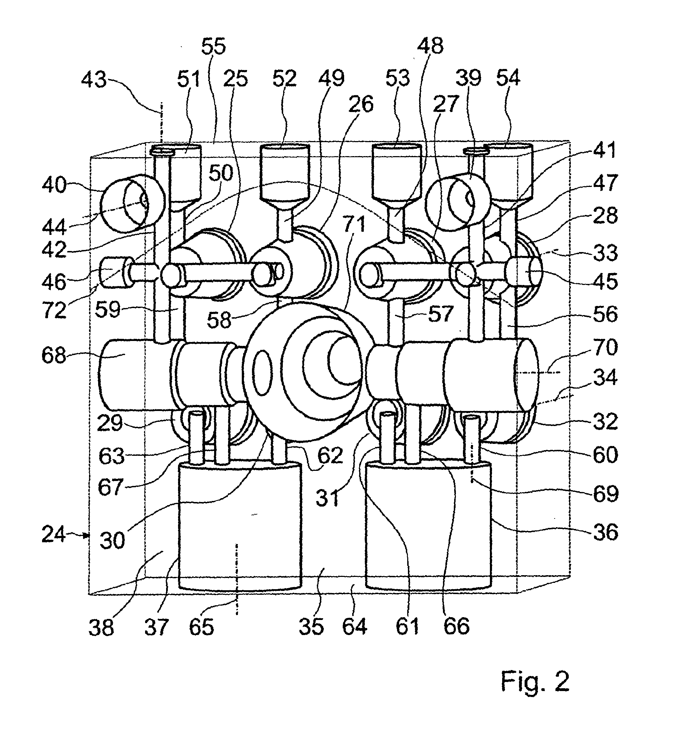

Zur hydraulischen Verschaltung der zwischen dem Hauptbremszylinder 3 und den Radbremsen HL, VR, VL und HR angeordneten Elemente ist ein Hydraulikaggregat 23 vorgesehen, welches einen in Figur 2 schematisch aufgezeigten Gehäuseblock 24 aufweist.

Wie der Figur 2 zu entnehmen ist, weist der Gehäuseblock 24 zur Aufnahme einer von dem Hauptbremszylinder 3 in den Gehäuseblock 24 des Hydraulikaggregates 23 geförderten Bremsflüssigkeit einen Bremsdruckgeberanschluß 39 für den ersten Bremskreis 4 und einen weiteren Bremsdruckgeberanschluß 40 für den zweiten Bremskreis 5 auf. Die Bremsdruckgeberanschlüsse 39, 40 stellen Bohrungen dar, welche von seiten einer Anschluß- bzw. Flanschfläche 38 des Hydraulikaggregates 23 für den Pumpenmotor 22 in den Gehäuseblock 24 eingebracht sind. Die Bremsdruckgeberanschlüsse 39, 40 sind jeweils über eine durchgehende, gerade Bohrung 41 bzw. 42, deren Längsachse 43 senkrecht und versetzt zu einer Längsachse 44 der Bremsdruckgeberanschlüsse 39, 40 verläuft, mit einer ersten Reihe Ventilaufnahmeräume 25 bis 28 zur Aufnahme der Einlaßventile 10 bis 13 und einem Pumpenaufnahmeraum 68 zur Aufnahme der Rückförderpumpen 17 und 21 verbunden.

Dabei führt die Bohrung 41 bzw. 42 jeweils zu einem Einlaßventil 28 bzw. 25, welches mit einem weiteren Einlaßventil 27 bzw. 26 desselben Bremskreises 4 bzw. 5 über eine senkrecht zu der Längsachse 43 der Bohrung 41 bzw. 42 ausgerichtete und von dieser abzweigenden Bohrung 45 bzw. 46 verbunden ist. Diese Bohrungen 45, 46 sind im Betriebszustand an ihrem Ende an einer Außenseite des Gehäuseblocks 24 jeweils durch ein übliches Verschlußmittel verschlossen.

Von den Einlaßventilen 25 bis 28 führt jeweils eine achsparallel zu den Bohrungen 41, 42 angeordnete Bohrung 47, 48, 49, 50 zu einem zugeordneten, koaxial ausgebildeten Radbremsenanschluß 51 bis 54. Die jeweils zu einer der Radbremsen HL, VR, VL, HR führenden Radbremsenanschlüsse 51 bis 54 sind in einer geraden Reihe angeordnet und von einer in der Figur 2 eine Oberseite bildenden Fläche 55, welche senkrecht zu der auch die Bremsdruckgeberanschlüsse 39, 40 aufweisenden Anschlußfläche 38 für den Pumpenmotor 22 verläuft, in den Gehäuseblock 24 eingebracht.

Des weiteren führen von den Einlaßventilen 25 bis 28 jeweils vorliegend koaxial zu den Bohrungen 47, 48, 49, 50 angeordnete und hier fertigungstechnisch eine Fortsetzung der letzteren Bohrungen darstellende Leitungen 56, 57, 58, 59 zu Ventilaufnahmeräumen 29 bis 32, welche zur Aufnahme der Auslaßventile 14, 15, 18, 19 vorgesehen sind.

Die Ventilaufnahmeräume 29 bis 32 zur Aufnahme der Auslaßventile 14, 15, 18, 19 sind wie die Ventilaufnahmeräume 25 bis 28 zur Aufnahme der Einlaßventile 10 bis 13 gestuft von einer der Anschlußfläche 38 für den Pumpenmotor 22 gegenüberliegenden Seite 35 in den Gehäuseblock 24 eingebracht und in einer zweiten, parallelen Reihe angeordnet, so daß die Ventilaufnahmeräume 25 bis 32 der ersten und zweiten Reihe bezüglich ihrer Längsachsen 33, 34 achsparallel sowie achsparallel zu den Bremsdruckgeberanschlüssen 39, 40 ausgerichtet sind.

Von den Ventilaufnahmeräumen 29 bis 32 zur Aufnahme der Auslaßventile 14, 15, 18, 19 führt jeweils eine separate, direkte, als Bohrung ausgebildete Verbindung 60, 61, 62, 63 zu einem Niederdruckspeicheraufnahmeraum 36 bzw. 37, welcher zur Aufnahme des Niederdruckspeichers 16 bzw. 20 vorgesehen ist.

Die Niederdruckspeicheraufnahmeräume 36, 37, welche von einer in der Figur 2 eine Unterseite darstellenden Fläche 64 als kreisrunde Bohrungen in den Gehäuseblock 24 eingearbeitet sind, sind mit ihren Längsachsen 65 achsparallel zu den Bohrungen 60 bis 63 sowie senkrecht zu den Längsachse 33, 34 der Ventilaufnahmeräume 25 bis 32 angeordnet.

Von den Niederdruckspeicheraufnahmeräumen 36, 37 führt jeweils eine weitere als separate Bohrung ausgebildete Verbindung 66, 67 zu dem Pumpenaufnahmeraum 68 zur Aufnahme der Rückförderpumpen 17 und 21. Dabei verläuft eine Längsachse 69 dieser weiteren Bohrungen 66, 67 achsparallel und in Richtung der Anschlußfläche 38 für den Pumpenmotor 22 exzentrisch versetzt zu der Längsachse 65 der Niederdruckspeicheraufnahmeräume 36, 37, welche auf der dem Pumpenaufnahmeraum 68 abgewandten Seite der Ventilaufnahmeräume 29 bis 32 der Auslaßventile 14, 15, 18, 19 angeordnet sind.

Der Pumpenaufnahmeraum 68 ist zwischen der ersten Reihe Ventilaufnahmeräume 25 bis 28 und der zweiten Reihe Ventilaufnahmeräume 29 bis 32 angeordnet und als eine in Richtung Mitte sich gestuft verjüngende Bohrung in den Gehäuseblock 24 eingebracht, wobei eine Längsachse 70 des Pumpenaufnahmeraumes 68 senkrecht zu den Längsachsen 33 bzw. 34 der Ventilaufnahmeräume 25 bis 32 verläuft.

Mittig mündet in den Pumpenaufnahmeraum 68 ein topfartiger Aufnahmeraum 71, der senkrecht zu der Längsachse 69 des Pumpenaufnahmeraumes 68 und achsparallel zu den Bremsdruckgeberanschlüssen 39, 40 seitens der Anschlußfläche 38 für den Pumpenmotor 22 in den Gehäuseblock 24 eingebracht ist. In diesem Aufnahmeraum 71 ist in montiertem Zustand ein Exzenter des Pumpenmotors 22 auf an sich bekannte und beispielsweise in der DE 44 31 250 A1 beschriebene Weise angeordnet.

Ein in der Figur 2 angedeuteter Konturverlauf 72 zeigt im wesentlichen die Position des an den Gehäuseblock 24 angeflanschten Pumpenmotors 22.

Wie der Figur 2 weiterhin zu entnehmen ist, weist der Pumpenaufnahmeraum 68 Mündungen 73 bzw. 74 der bis hierhin in den Gehäuseblock 24 getriebenen und somit die Bremsdruckgeberanschlüsse 39, 40 und die Ventilaufnahmeräume 25 bis 28 der Einlaßventile mit dem Pumpenaufnahmeraum 68 verbindenden Bohrungen 41 und 42 auf, welche und an ihrem dem Pumpenaufnahmeraum 68 entgegengesetzten Ende jeweils an der die Radbremsenanschlüsse 51, 52, 53, 54 aufweisenden Fläche 55 des Gehäuseblocks 24 nach außen münden und im Einbauzustand durch ein Verschlußmittel verschlossen sind.

Der für die Rückförderpumpen 17, 21 gemeinsame Pumpenmotor kann in an sich bekannter Weise ausgeführt sein, wobei hier eine über geeignete Software realisierte, getaktete Ansteuerung der Rückförderpumpen 17, 21 eine Druckpulsationsdämpfung vorgesehen ist, welche eine Ausgestaltung des Gehäuseblocks 24 ohne Dämpfungskammern erlaubt.

## Patentansprüche

1. Hydraulikaggregat für eine Fahrzeugbremsanlage (1) mit Blockierschutzeinrichtung, mit einem Gehäuseblock (24), aufweisend für einen Bremskreis (4,5)
- einen Bremsdruckgeberanschluß (39,40) und Radbremsenanschlüsse (51,52,53,54),
- wenigstens einen Ventilaufnahmeraum (25,26,27,28) zur Aufnahme wenigstens eines Einlaßventils (10, 11,12,13) und wenigstens einen Ventilaufnahmeraum (29,30,31, 32) zur Aufnahme wenigstens eines Auslaßventils (14,15,18,19), wobei die Ventilaufnahmeräume (25 bis 32) achsparallel zu dem Bremsdruckgeberanschluß (39,40) angeordnet sind,
- einen Pumpenaufnahmeraum (68), dessen Längsachse (70) wenigstens annähernd senkrecht zu Längsachsen (33,34) der Ventilaufnahmeräume (25 bis 32) verläuft,
- wenigstens einen Niederdruckspeicheraufnahmeraum (36,37), und
- eine durchgehende, gerade Verbindung (41,42) zwischen dem Bremsdruckgeberanschluß (39,40), dem wenigstens einen Ventilaufnahmeraum (25,26,27,28) für ein Einlaßventil (10,11,12,13) und dem Pumpenaufnahmeraum (68), deren Längsachse (43) wenigstens annähernd senkrecht zu den Längsachsen (33,34) der Ventilaufnahmeräume (25 bis 32) und der Längsachse (70) des Pumpenaufnahmeraums (68) verläuft
**dadurch gekennzeichnet,**
**dass** der Gehäuseblock (24) ohne Dämpfungskammer ausgestaltet ist und dass der Pumpenaufnahmeraum (68) zwischen der ersten Reihe Ventilaufnahmeräume (25 bis 28) und der zweiten Reihe Ventilaufnahmeräume (29 bis 32) angeordnet ist.

2. Hydraulikaggregat nach Anspruch 1, **dadurch gekennzeichnet, daß** die durchgehende, gerade Verbindung (41,42) an einer die Radbremsenanschlüsse (51,52, 53,54) aufweisenden Fläche (55) des Gehäuseblocks (24) nach außen mündet und im Einbauzustand durch ein Verschlußmittel verschlossen ist.

3. Hydraulikaggregat nach Anspruch 1 oder 2, **dadurch gekennzeichnet, daß** die die Radbremsenanschlüsse (51,52,53,54) aufweisende Fläche (55) des Gehäuseblocks (24) wenigstens annähernd senkrecht zu einer die Bremsdruckgeberanschlüsse (39,40) aufweisenden Fläche (38) des Gehäuseblocks (24) ausgerichtet ist.

4. Hydraulikaggregat nach einem der Ansprüche 1 bis 3, **dadurch gekennzeichnet, daß** die dem einen Bremskreis (4,5) zugeordnete Ventilaufnahmeräume (25,26,27,28) für ein Einlaßventil (10,11,12,13) über eine mit der durchgehenden Verbindung (41,42) verbundene, wenigstens annähernd senkrecht zu deren Längsachse (43) angeordnete Bohrung (45,46) verbunden sind.

5. Hydraulikaggregat nach einem der Ansprüche 1 bis 4, **dadurch gekennzeichnet, daß** mehrere Ventilaufnahmeräume (25,26,27,28) zur Aufnahme von Einlaßventilen (10,11,12,13) und/oder mehrere Ventilaufnahmeräume (29,30,31,32) zur Aufnahme von Auslaßventilen (14,15,18,19) jeweils in einer geraden Reihe angeordnet sind.

6. Hydraulikaggregat nach einem der Ansprüche 1 bis 5, **dadurch gekennzeichnet, daß** die Radbremsenanschlüsse (51,52,53,54) in einer geraden Reihe angeordnet sind.

7. Hydraulikaggregat nach einem der Ansprüche 1 bis 6, **dadurch gekennzeichnet, daß** ein Aufnahmeraum (71) für einen Pumpenmotor (22) mittig im Bereich des Pumpenaufnahmeraums (68) und achsparallel zu dem Bremsdruckgeberanschluß (39,40) ausgebildet ist.

8. Hydraulikaggregat nach einem der Ansprüche 1 bis 7, **gekennzeichnet durch** eine separate, insbesondere als eine gerade Bohrung ausgebildete, direkte Verbindung (60,61,62,63) zwischen jedem Ventilaufnahmeraum (29, 30,31,32) eines Auslaßventils (14,15,18,19) und dem zugeordneten Niederdruckspeicheraufnahmeraum (36,37).

9. Hydraulikaggregat nach einem der Ansprüche 1 bis 8, **dadurch gekennzeichnet, daß** der wenigstens eine Niederdruckspeicheraufnahmeraum (36,37) auf einer dem Pumpenaufnahmeraum (68) abgewandten Seite des wenigstens einen Ventilaufnahmeraums (29,30,31,32) eines Auslaßventils (14,15,18,19) angeordnet ist und dessen Längsachse (65) wenigstens annähernd senkrecht zu den Längsachsen (33,34) der Ventilaufnahmeräume (25 bis 32) und zu der Längsachse (70) des Pumpenaufnahmeraumes (68) verläuft.

10. Hydraulikaggregat nach einem der Ansprüche 1 bis 9, **dadurch gekennzeichnet, daß** eine weitere separate Verbindung (66,67) zwischen dem Niederdruckspeicheraufnahmeraum (36,37) und dem Pumpenaufnahmeraum (68) vorgesehen ist, deren Längsachse (69) vorzugsweise achsparallel zu der Längsachse (65) des Niederdruckspeicheraufnahmeraums (36,37) in Richtung einer Anschlußfläche (38) des Hydraulikaggregates (23) für einen Pumpenmotor (22) versetzt angeordnet ist.

11. Hydraulikaggregat nach einem der Ansprüche 1 bis 10, **gekennzeichnet durch** seine Verwendung mit einer druckpulsationsdämpfenden, insbesondere getakteten, Ansteuerung eines Pumpenmotors (22).

## Claims

1. Hydraulic unit for a vehicle brake system (1) having an anti-lock device, having a housing block (24), and having, for one brake circuit (4, 5),
- one brake pressure transducer port (39, 40) and wheel brake ports (51, 52, 53, 54),
- at least one valve holding space (25, 26, 27, 28) for holding at least one inlet valve (10, 11, 12, 13) and at least one valve holding space (29, 30, 31, 32) for holding at least one outlet valve (14, 15, 18, 19), with the valve holding spaces (25 to 32) being arranged axially parallel to the brake pressure transducer port (39, 40),
- a pump holding space (68) whose longitudinal axis (70) runs at least approximately perpendicularly with respect to longitudinal axes (33, 34) of the valve holding spaces (25 to 32),
- at least one low-pressure accumulator holding space (36, 37), and
- a continuous, straight connection (41, 42) between the brake pressure transducer port (39, 40), the at least one valve holding space (25, 26, 27, 28) for an inlet valve (10, 11, 12, 13), and the pump holding space (68), the longitudinal axis (43) of which connection (41, 42) runs at least approximately perpendicularly with respect to the longitudinal axes (33, 34) of the valve holding spaces (25 to 32) and the longitudinal axis (70) of the pump holding space (68),
**characterized**
**in that** the housing block (24) is designed without a damping chamber and in that the pump holding space (68) is arranged between the first row of valve holding spaces (25 to 28) and the second row of valve holding spaces (29 to 32).

2. Hydraulic unit according to Claim 1, **characterized in that** the continuous, straight connection (41, 42) opens out to the outside at a face (55), which has the wheel brake ports (51, 52, 53, 54), of the housing block (24), and in the installed state, is closed off by a closure means.

3. Hydraulic unit according to Claim 1 or 2, **characterized in that** the face (55), which has the wheel brake ports (51, 52, 53, 54), of the housing block (24) is aligned at least approximately perpendicular to a face (38), which has the brake pressure transducer ports (39, 40), of the housing block (24).

4. Hydraulic unit according to one of Claims 1 to 3, **characterized in that** the valve holding spaces (25, 26, 27, 28), which are assigned to the one brake circuit (4, 5), for an inlet valve (10, 11, 12, 13) are connected by means of a bore (45, 46) which is connected to the continuous connection (41, 42) and is arranged at least approximately perpendicular to the longitudinal axis (43) of said connection (41, 42).

5. Hydraulic unit according to one of Claims 1 to 4, **characterized in that** a plurality of valve holding spaces (25, 26, 27, 28) for holding inlet valves (10, 11, 12, 13) and/or a plurality of valve holding spaces (29, 30, 31, 32) for holding outlet valves (14, 15, 18, 19) are arranged in each case in a straight row.

6. Hydraulic unit according to one of Claims 1 to 5, **characterized in that** the wheel brake ports (51, 52, 53, 54) are arranged in a straight row.

7. Hydraulic unit according to one of Claims 1 to 6, **characterized in that** a holding space (71) for a pump motor (22) is formed centrally in the region of the pump holding space (68) and axially parallel to the brake pressure transducer port (39, 40).

8. Hydraulic unit according to one of Claims 1 to 7, **characterized by** a separate, direct connection (60, 61, 62, 63), which is embodied in particular as a straight bore, between each valve holding space (29, 30, 31, 32) of an outlet valve (14, 15, 18, 19) and the associated low-pressure accumulator holding space (36, 37).

9. Hydraulic unit according to one of Claims 1 to 8, **characterized in that** the at least one low-pressure accumulator holding space (36, 37) is arranged on a side, which faces away from the pump holding space (68), of the at least one valve holding space (29, 30, 31, 32) of an exhaust valve (14, 15, 18, 19), and the longitudinal axis (65) of said low-pressure accumulator holding space (36, 37) runs at least approximately perpendicularly with respect to the longitudinal axes (33, 34) of the valve holding spaces (25 to 32) and with respect to the longitudinal axis (70) of the pump holding space (68).

10. Hydraulic unit according to one of Claims 1 to 9, **characterized in that** a further, separate connection (66, 67) is provided between the low-pressure accumulator holding space (36, 37) and the pump holding space (68), the longitudinal axis (69) of which connection (66, 67) is preferably arranged axially parallel to the longitudinal axis (65) of the low-pressure accumulator holding space (36, 37) so as to be offset in the direction of a port face (38) of the hydraulic unit (23) for a pump motor (22).

11. Hydraulic unit according to one of Claims 1 to 10, **characterized by** its use with pressure-pulse-damping, in particular clocked actuation of a pump motor (22).

## Revendications

1. Groupe hydraulique pour système de freinage (1) équipé d'un dispositif antiblocage, avec un bloc de boîtier (24) qui comporte pour un circuit de freinage (4, 5),
- un raccord de capteur de pression de freinage (39, 40) et des raccords de frein de roue (51, 52, 53, 54),
- au moins un logement de soupape (25, 26, 27, 28) pour accueillir au moins une soupape d'entrée (10, 11, 12, 13), et au moins un logement de soupape (29, 30, 31, 32) pour accueillir au moins une soupape de sortie (14, 15, 18, 19), les logements (25 à 32) ayant leurs axes parallèles au raccord de capteur de pression de freinage (39, 40),
- un logement de pompe (68) dont l'axe longitudinal (70) est au moins à peu près perpendiculaire aux axes longitudinaux (33, 34) des logements de soupape (25 à 32),
- au moins un logement d'accumulateur basse pression (36, 37), et
- une liaison rectiligne continue (41, 42) entre le raccord capteur de pression de freinage (39, 40), le logement de soupape (25, 26, 27, 28) au nombre d'un au moins pour une soupape d'entrée (10, 11, 12, 13) et le logement de pompe (68), cette liaison ayant son axe longitudinal (43) à peu près perpendiculaire aux axes longitudinaux (33, 34) des logements de soupape (25 à 32) et à l'axe longitudinal (70) du logement de pompe (68),
**caractérisé en ce que**
le bloc de boîtier (24) ne comporte pas de chambre d'amortissement et le logement de pompe (68) est disposé entre la première série de logements de soupape (25 à 28) et la seconde série de logements de soupape (29 à 32).

2. Groupe hydraulique selon la revendication 1,
**caractérisé en ce que**
la liaison rectiligne continue (41, 42) débouche vers l'extérieur sur une face (55) du bloc de boîtier (54) présentant les raccords de frein de roue (51, 52, 53, 54), et à l'état monté elle est obturée par un moyen de fermeture.

3. Groupe hydraulique selon la revendication 1 ou 2,
**caractérisé en ce que**
la face (55) du bloc de boîtier (24), présentant les raccords de frein de roue (51, 52, 53, 54) est au moins à peu près perpendiculaire à une face (38) du bloc de boîtier (24) présentant les raccords de capteur de pression de freinage (39, 40).

4. Groupe hydraulique selon une des revendications 1 à 3,
**caractérisé en ce que**
les logements de soupape (25, 26, 27, 28) qui accueillent une soupape (10, 11, 12, 13) et qui sont associés à un circuit de freinage (4, 5), sont reliés par un alésage (45, 46) qui est lui-même relié à la liaison continue (41, 42) et disposé à peu près perpendiculairement à l'axe longitudinal (43) de celle-ci.

5. Groupe hydraulique selon une des revendications 1 à 4,
**caractérisé en ce que**
plusieurs logements de soupape (25, 26, 27, 28) servant à accueillir des soupapes d'entrée (10, 11, 12, 13) et/ou plusieurs logements de soupape (29, 30, 31, 32) pour accueillir des soupapes de sortie (14, 15, 18, 19), sont rangés en ligne droite.

6. Groupe hydraulique selon une des revendications 1 à 5,
**caractérisé en ce que**
les raccords de frein de roue (51, 52, 53, 54) sont rangés en ligne droite.

7. Groupe hydraulique selon une des revendications 1 à 6,
**caractérisé en ce qu'**
un logement (71) pour un moteur de pompe (22) est au milieu dans la zone du logement de pompe (68) et son axe est parallèle au raccord de capteur de pression de freinage (39, 40).

8. Groupe hydraulique selon une des revendications 1 à 7,
**caractérisé en ce qu'**
il présente une liaison séparée (60, 61, 62, 63), notamment sous la forme d'un alésage rectiligne, reliant directement chaque logement (29, 30, 31, 32) d'une soupape de sortie (14, 15, 18, 19) au logement du réservoir basse pression (36, 37) associé.

9. Groupe hydraulique selon une des revendications 1 à 8,
**caractérisé en ce que**
le logement d'accumulateur basse pression (36, 37) au nombre d'un au moins, est du côté éloigné du logement de pompe (68) d'un logement (29, 30, 31, 32) au nombre d'un au moins d'une soupape de sortie (14, 15, 18, 19), et son axe longitudinal (65) est au moins à peu près perpendiculaire aux axes longitudinaux (33, 34) des logements de soupapes (25 à 32) et à l'axe longitudinal (70) du logement de pompe (68).

10. Groupe hydraulique selon une des revendications 1 à 9,
**caractérisé en ce qu'**
entre le logement d'accumulateur basse pression (36, 37) et le logement de pompe (68), une autre liaison séparée (66, 67) a son axe longitudinal (69) avantageusement parallèle à l'axe longitudinal (65) du logement d'accumulateur à basse pression (36, 37), et décalé en direction de la face de raccordement (38) de l'Groupe hydraulique (23) destiné à un moteur de pompe (22).

11. Groupe hydraulique selon une des revendications 1 à 10,
**caractérisé en ce qu'**
il utilise une commande d'un moteur de pompe (22) avec amortissement des pulsations de pression, et notamment cadencée
